## Europäisches Patentamt

(19) **European Patent Office**   (11) Veröffentlichungsnummer: **0 039 375**

**Office européen des brevets**   **B1**

(12)   # EUROPÄISCHE PATENTSCHRIFT

(45) Veröffentlichungstag der Patentschrift:
**09.11.83**

(51) Int. Cl.³: **F 04 F 11/02,** F 02 B 33/42,
G 05 D 7/01

(21) Anmeldenummer: **80200410.1**

(22) Anmeldetag: **02.05.80**

(54) Steuerungseinrichtung in einer gasdynamischen Druckwellenmaschine zur Aufladung von Verbrennungsmotoren.

(43) Veröffentlichungstag der Anmeldung:
**11.11.81 Patentblatt 81/45**

(73) Patentinhaber: **BBC Aktiengesellschaft Brown, Boveri & Cie., Haselstrasse, CH-5401 Baden (CH)**

(45) Bekanntmachung des Hinweises auf die Patenterteilung:
**09.11.83 Patentblatt 83/45**

(72) Erfinder: **Mayer, Andreas, Dipl.-Ing., Fohrhölzlistrasse 14b, CH-5443 Niederrohrdorf (CH)**
Erfinder: **Komauer, Christian, Trottenstrasse 12, CH-5415 Nussbaumen (CH)**

(84) Benannte Vertragsstaaten:
**AT BE CH DE FR GB IT LI NL SE**

(56) Entgegenhaltungen:
**CH - A - 378 595**
**DE - A - 1 403 086**
**DE - B - 1 055 882**
**FR - A - 2 327 428**
**US - A - 2 821 836**
**US - A - 3 400 888**
**US - A - 3 557 816**

## Steuerungseinrichtung in einer gasdynamischen Druckwellenmaschine zur Aufladung von Verbrennungsmotoren

Die vorliegende Erfindung betrifft eine Steuerungseinrichtung in einer gasdynamischen Druckwellenmaschine zur Aufladung von Verbrennungsmotoren nach dem Oberbegriff des patentanspruchs 1.

Zur Verbesserung der Spülung einer gasdynamischen Druckwellenmaschine eines aufgeladenen Verbrennungsmotors im Leerlauftemperaturbereich unterhalb 300° C dienen Gastaschen, in die ein Teil der in die Druckwellenmaschine eintretenden Hochdruckabgase abgezweigt wird, während der restliche Teil der Hochdruckabgase direkt in die Zellen des Rotors eintritt und die eigentliche Kompressionsarbeit leistet. Bei einer solchen Auslegung erzeugt der die Kompressionsarbeit leistende Anteil der Hochdruckabgase bei Vollastbetrieb den dafür erforderlichen Ladedruck.

Wird hingegen eine Druckwellenmaschine, z. B. für Personenautos, für tiefe Vollastdrehzahlen optimal ausgelegt, so liefert sie bei hohen Vollastdrehzahlen zu hohe Ladedrücke. Demnach müßte bei solchen Anwendungen der Zufluß zur Gastasche im Leerlauftemperaturbereich zwecks Verbesserung der Spülung und im Temperaturbereich der hohen Vollastdrehzahlen zur Reduktion des zu hohen Ladedrucks offen und im Temperaturbereich der tiefen Vollastdrehzahlen geschlossen sein.

Um also eine befriedigende Anpassung der Fördercharakteristik für die Verbrennungsluft zu erhalten, muß der Gastaschenzufluß entsprechend dem vorher gesagten gesteuert werden.

Ein aus der Patentliteratur (CH-PS 330 610) bekannter Vorschlag in dieser Richtung geht dahin, entweder den überhöhten Ladedruck oder den durch die Druckwellenmaschine geleiteten Hochdruckabgasstrom durch eine Überdruckentlastungseinrichtung, z. B. eine selbsttätig öffnende Klappe, abzubauen. Die überschüssige Ladeluft wird dabei ins Freie abgeblasen bzw. wird ein Teil der Hochdruckabgase vor dem Eintritt in die Druckwellenmaschine durch eine Nebenstrom- oder Kurzschlußleitung direkt in die Niederdruckabgasleitung, d. h., in die Auspuffleitung und damit ins Freie abgeleitet.

Diese bekannten Maßnahmen zur Anpassung der Fördercharakteristik einer Druckwellenmaschine an den jeweiligen Luftbedarf des Motors sind in ihrer Wirkungsweise aber unvollkommen, da sie keine kontinuierliche Steuerung des Gas- bzw. Luftstromes bewerkstelligen. Sie öffnen und schließen bei bestimmten Drücken, darüber erfolgt eventuell noch eine gewisse Anpassung des Durchflusses durch eine geschwindigkeits- und querschnittsabhängige Drosselung durch die Klappe bzw. das Ventil. Vor allem lassen sie die Temperatur unberücksichtigt, die für ein optimales Betriebsverhalten ebenfalls als Steuergröße verwendet werden muß. Dazu kommt auch noch, daß die Energie der abgeblasenen Ladeluft und des in den Auspuff überströmenden Gases für die Energiebilanz des Aggregats bzw. auch für die Spülung im Zellenrotor verloren ist.

Vom Standpunkt der Betriebssicherheit ist noch zu erwähnen, daß die beschriebenen Abblase- bzw. Nebenstromeinrichtungen durch die hohe Temperatur, die häufige Betätigung ihrer Teile, wie Bolzen, Federn, Hebel u. dgl., einem starken Verschleiß und durch den Ruß im Abgas auch einer bedeutenden Verschmnutzung unterliegen und dementsprechend störanfällig sind.

Es stellt sich also die Aufgabe, den Gastaschenzufluß über den ganzen Betriebsbereich mit möglichst rationellem Aufwand in Abhängigkeit von der Motorlast zu steuern. Da diese eine Funktion der Temperatur des Hochdruckabgase vor dem Eintritt in den Zellenrotor ist, muß eine Einrichtung für diese Steuerung den Querschnitt des Gastaschenzuflusses temperaturabhängig verändern.

Bei der vorliegenden, im kennzeichnenden Teil des Patentanspruchs 1 definierten Erfindung wird diese Temperatur zur Steuerung des Gastaschenzuflusses verwendet, um die Nachteile der bekannten erwähnten Einrichtungen zu vermeiden.

Die Erfindung wird im folgenden unter Bezugnahme auf die Zeichnung näher beschrieben. In dieser stellen dar:

Fig. 1 ein Diagramm der Öffnungscharakteristik der Gastaschensteuerung bei einem Lastwagendieselmotor,

Fig. 2 die Einrichtung, mit der die Öffnungscharakteristik nach Fig. 1 verwirklicht werden kann,

Fig. 3 ein Diagramm der Öffnungscharakteristik der Gastaschensteuerung bei einem Dieselmotor für Personenautos,

Fig. 4 die Einrichtung, die die Charakteristik nach Fig. 3 verwirklicht,

Fig. 5 ein Diagramm einer öffnungscharakteristik, die den ganzen Betriebsbereich eines Motors abdeckt,

Fig. 6 die zur Öffnungscharakteristik von Fig. 5 gehörige Einrichtung,

Fig. 7 die schematische Darstellung einer als Steuerelement dienenden Bimetallklappe für die Einrichtung nach Fig. 6,

Fig. 8 ein Diagramm, das den temperaturabhängigen Verlauf der Ausdehnungskoeffizienten der Komponenten einer Bimetallklappe nach Fig. 7 zeigt,

Fig. 9 schematisch die Anordnung einer Bimetallklappe vor einer Gastasche,

Fig. 10 verschiedene Befestigungsmöglichkeiten einer Bimetallklappe im Gehäuse einer Druckwellenmaschine und die

Fig. 11 verschiedene Ausführungsarten von Bimetallklappen.

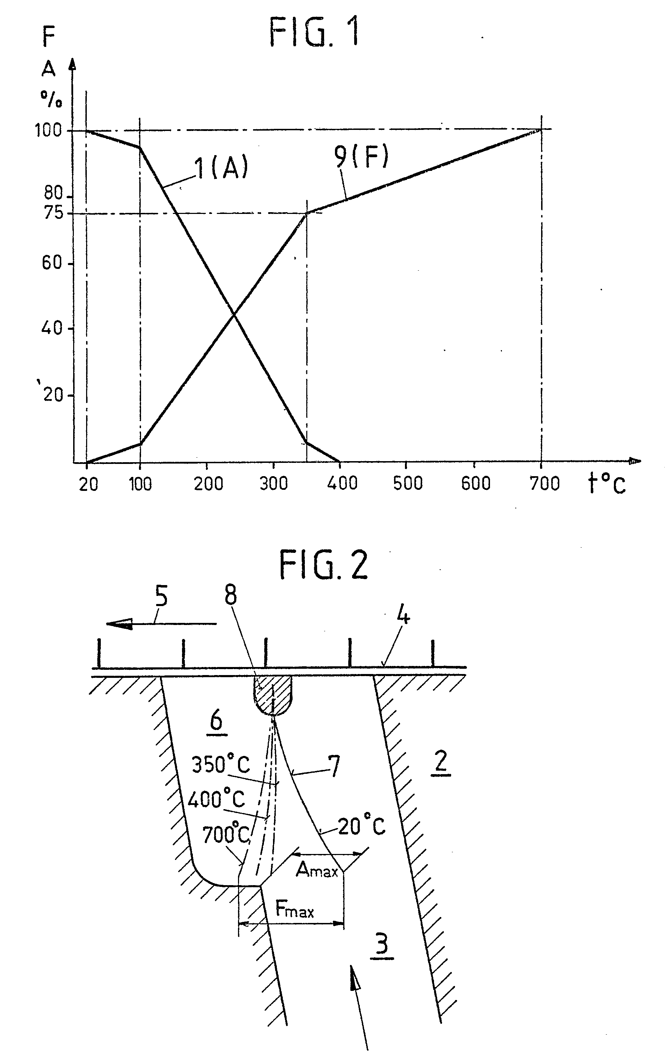

Die Fig. 1 und 2 beziehen sich auf eine Anwendung der Erfindung auf einen Lastwagendiselmotor, dessen Druckwellenmaschine so ausgelegt ist, daß sie bei der Vollasttemperatur den für die Volleistung erforderlichen Ladedruck liefert und bei der der Querschnitt des Gastaschenzuflusses vom Größtwert bei der Raumtemperatur von 20°C bis zum Erreichen der oberen Grenze von ca. 350°C des Leerlauftemperaturbereiches kontinuierlich abnehmen soll. Dieser Zusammenhang zwischen dem zu steuernden Zuflußquerschnitt der Gastasche und der Temperatur ist im Diagramm der Fig. 1 durch den Linienzug 1 dargestellt. In diesem Diagramm stellt die Abszisse die Temperatur der Hochdruckabgase vor dem Eintritt in den Zellenläufer und die Ordinate in Prozenten des vollen Öffnungsquerschnittes $A_{max}$ den Querschnitt A des Gastaschenzuflusses sowie den vom steuernden Element beschriebenen Weg F in Prozenten des Maximalausschlages $F_{max}$ dar.

Die Einrichtung, mit der diese temperaturabhängige Steuerung des Zuflußquerschnittes der Gastasche bewerkstelligt wird, ist in Fig. 2 dargestellt, die einen Ausschnitt aus dem Gehäuse 2 mit dem Hochdruckabgaskanal 3 am Eintritt in den Zellenrotor 4 zeigt, dessen Drehrichtung durch den Pfeil 5 angezeigt ist. Das Ende des Kanals 3 ist in bekannter Weise zu einer Gastasche 6 erweitert, in die bis zum Erreichen der Vollasttemperatur ein mehr oder minder großer Teil der Hochdruckabgase aus dem Kanal 3 abgezweigt wird, um in diesem Betriebsbereich die Spülung zu verbessern.

Die temperaturabhängige Steuerung des Gastaschenzuflusses wird von einer Bimetallklappe 7 bewirkt, die in einem sich über die ganze Breite der Gastasche 6 erstreckenden Steg 8 starr eingespannt ist. Die Paarung der Bimetallkomponenten, aus der die Klappe 7 zusammengesetzt ist, und die Form der Klappe 7 bei Raumtemperatur sind so gewählt, daß sie bei Raumtemperatur den vollen Zuflußquerschnitt zur Gastasche 6 freigibt und diesen beim Hochlaufen der Druckwellenmaschine mit zunehmender Temperatur allmählich verkleinert und schließlich völlig versperrt. In der Fig. 2 ist die Ausgangsstellung bei der Raumtemperatur von 20°C voll ausgezogen und einige Zwischenstellungen sowie die Stellung bei einer angenommenen Maximaltemperatur von 700°C sind strichpunktiert eingezeichnet.

Die gewünschte temperaturabhängige Öffnungscharakteristik der Bimetallklappe 7, d. h., ihre temperaturabhängige Verformung, läßt sich durch verschiedene Maßnahmen erreichen, beispielsweise durch entsprechende Wahl ihrer beiden Komponenten, durch kontinuierliche und/oder abschnittsweise Änderung ihrer Wandstärken über die Klappenlänge, durch Hintereinanderschaltung verschiedener und/oder unterschiedlich langer Bimetallpaarungen über die Klappenlänge, durch seitenverkehrte Hintereinanderschaltung gleicher oder verschiedener Bimetallpaarungen sowie durch Kombinationen dieser Maßnahmen.

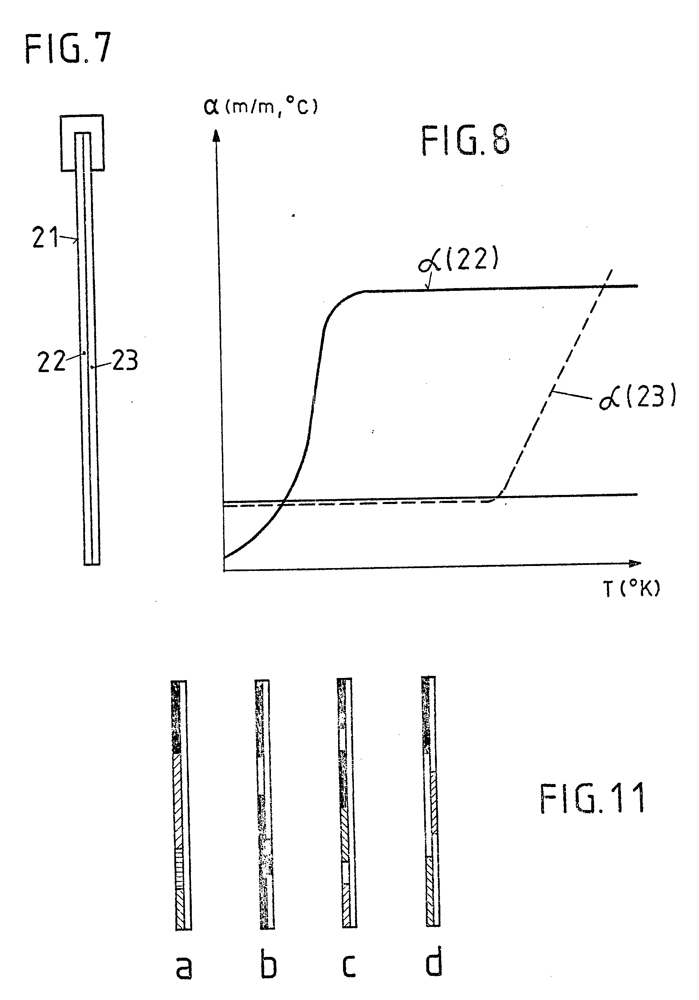

Die Fig. 11a—d zeigen im Querschnitt einige Beispiele solcher Kombinationen, wobei die Komponente mit dem Wert Null oder kleinsten Wert des Ausdehnungskoeffizienten, dabei handelt es sich üblicherweise um die Invar-Legierung, keine Schraffur oder Schwärzung aufweist. Die unterschiedlichen anderen Komponenten sind geschwärzt bzw. unterschiedlich schraffiert.

Der Linienzug 1 in Fig. 1 zeigt in idealisierter Form den gewünschten Verlauf des Zuflußquerschnittes der Gastasche als Funktion der Temperatur t. Danach soll der Querschnitt bis ca. 100°C um einen geringen Betrag, ca 5%, verringert werden, anschließend bis zum Erreichen der Temperatur von 350°C schließt die Klappe fast vollständig, und bei 400°C ist sie ganz geschlossen.

Der zweite Linienzug 9 in Fig. 1 zeigt in ebenfalls idealisierter Form den temperaturabhängigen Verformungsverlauf einer experimentell untersuchten Bimetallklappe, wie sie für die Steuerung des Gastaschenzuflusses nach Fig. 2 benutzt werden könnte. Die volle Ausbiegung des freien Endes der Klappe 7 im Temperaturintervall von 20°C bis 700°C ist in Fig. 2 mit $F_{max}$ bezeichnet, in Fig. 1 ist als Ordinate F hingegen in Prozenten von $F_{max}$ aufgetragen. Der Verlauf der Randausbiegung eines solchen Bimetalls zeigt bei etwa 100°C und etwa 350°C ausgeprägte Knickstellen, in natura allerdings weniger scharf als in der idealisierten Darstellung.

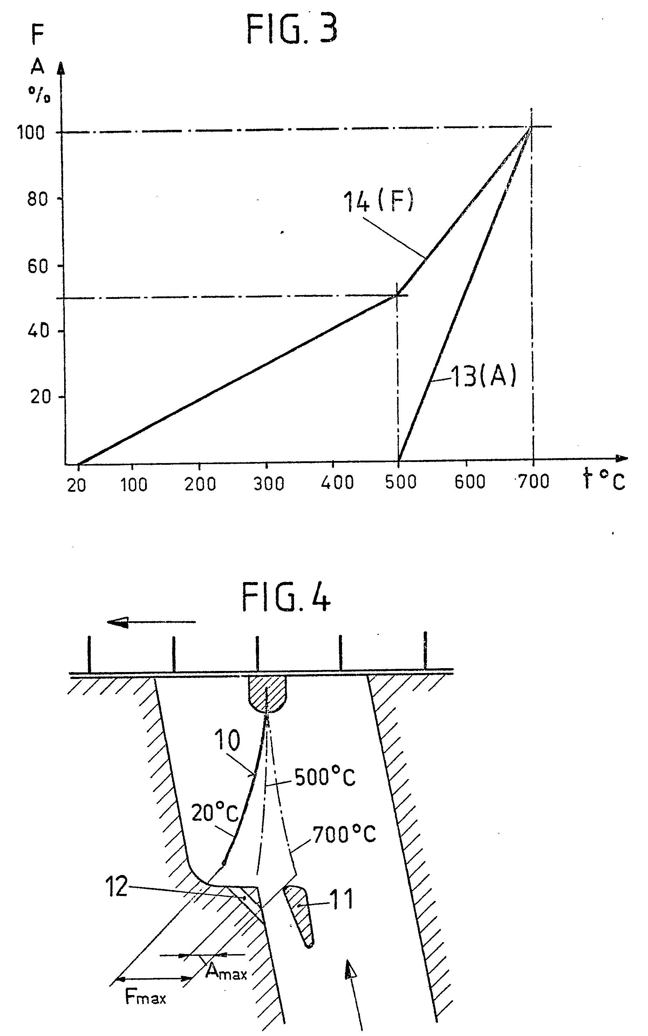

Das Diagramm und die Einrichtung nach Fig. 3 bzw. Fig. 4 beziehen sich auf eine Auswertung der erfindungsgemäßen Steuerungseinrichtung bei einem Dieselmotor für Personenwagen.

Entsprechend dem eingangs gesagten muß hier der zu hohe Ladedruck bei Vollast, etwa im Temperaturbereich von 500—700°C, reduziert werden, was durch Ableiten eines Teiles der Hochdruckabgase in die Gastasche geschieht, von wo es über die Zellen des Läufers direkt in die Auspuffleitung gelangt. Bei dieser Steuercharakteristik ist die Bimetallklappe 10 bei Raumtemperatur geschlossen und erreicht etwa bei 500°C Abgastemperatur die Stellung, von wo ab der Gastaschenzufluß mit zunehmender Temperatur immer weiter öffnet. Bei etwa 700°C erreicht die Bimetallklappe ihren maximalen Ausschlag. Um den Zuflußquerschnitt bei dieser Stellung zu stabilisieren, ist ein Strömungsteiler 11 vorgesehen. Er begrenzt den Ausschlag der Klappe, der erforderlich ist, weil wegen des reduzierten Hauptstroms der Hochdruckabgase und des dadurch verminderten Luftüberschusses im Motor die Abgastemperatur weiter zunehmen und der Klappenausschlag noch weiter anwachsen würde.

Da aber auch hier zum Start und im Leerlauf zwecks besserer Spülung Hochdruckabgas in die Gastasche abgezweigt werden muß, ist hier ein an sich bekannter Gastaschenkanal 12 vorgesehen, der in den genannten Betriebsphasen den Zufluß von Hochdruckabgas in die Gastasche erlaubt.

das Verhalten dieser Einrichtung ist im Diagramm der Fig. 3 dargestellt. Wie in Fig. 1 bedeuten die Ordinaten A und F den Querschnitt des Gastaschenzuflusses bzw. die Ausbiegung des freien Randes der Bimetallklappe 10 in Prozenten der Maximalwerte von A und F. Die Linie 13 zeigt, daß das Öffnen des Zuflußquerschnittes A bei 500°C beginnt und bei 700°C beendet sein soll. Die Bimetallklappe 10 befindet sich bei Raumtemperatur in ihrer Ausgangsstellung im Inneren der Gastasche, aus der sie erst bei Erreichen einer Temperatur von 500°C heraustritt und dann den Zuflußquerschnitt A gemäß dem durch die Linie 13 dargestellten Verlauf freigibt. Der Verlauf der Ausbiegung F wird durch den Linienzug 14 repräsentiert.

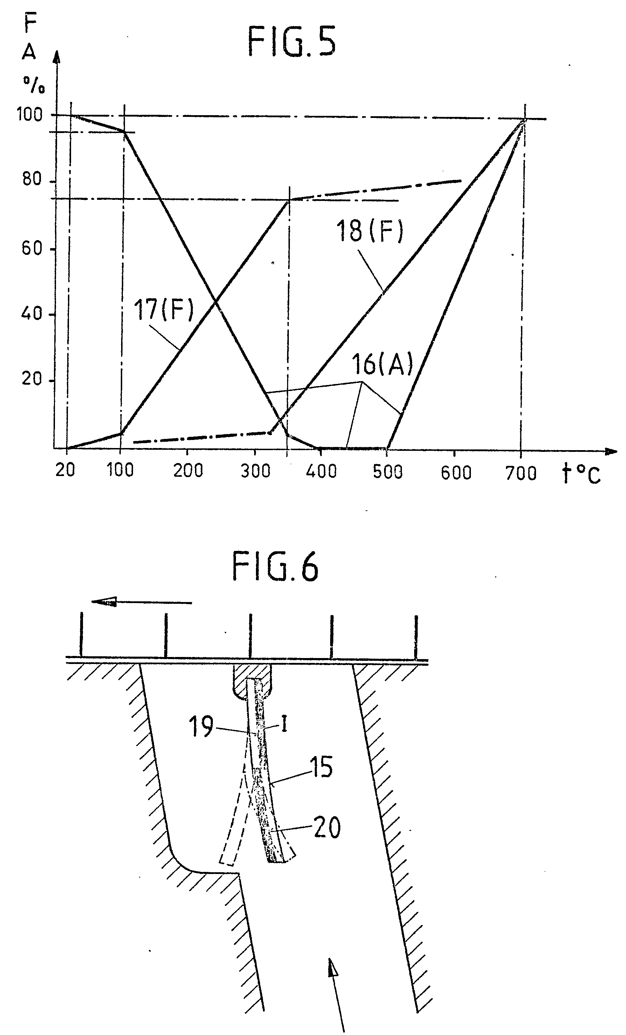

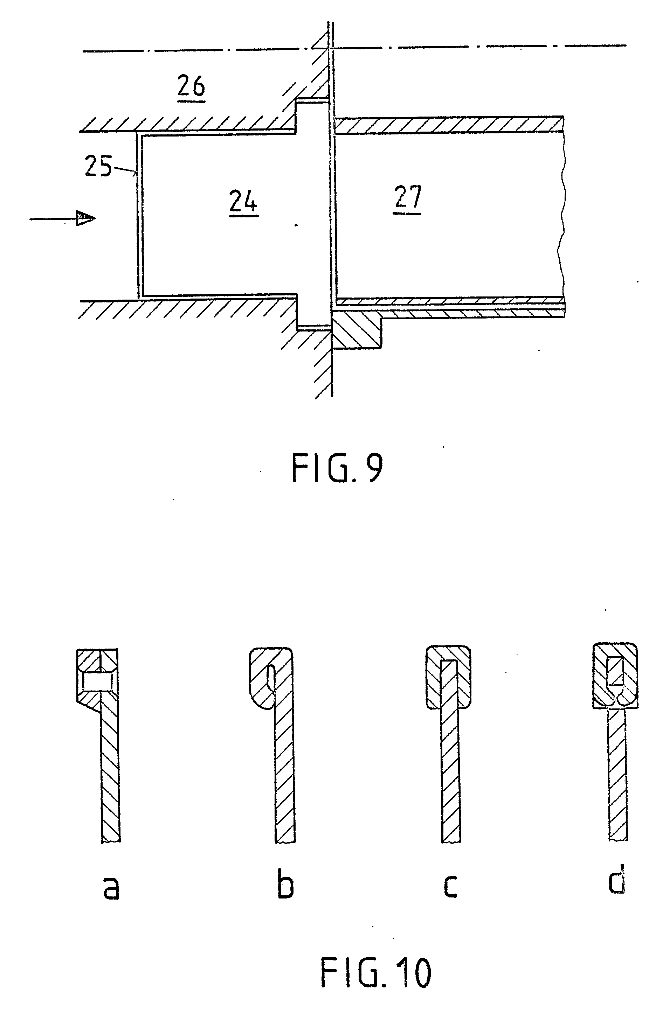

Die Fig. 5 und 6 beziehen sich auf eine aus zwei verschiedenenen Bimetallpaarungen zusammengesetzte Bimetallklappe 15, die beispielsweise für einen Personenwagendieselmotor verwendet werden kann, falls bei diesem ein Gastaschenkanal 12 gemäß der Ausführung nach Fig. 4 das laufverhalten bei Vollast und tiefen Drehzahlen beeinträchtigen würde.

In Fig. 5 stellt der Linienzug 16 wiederum den gewünschten temperaturabhängigen Öffnungsverlauf des Zuflußquerschnittes A der Gastasche dar, während die Linienzüge 17 und 18 die Ausbiegungen F der Bimetallabschnitte 19 und 20 der zusammengesetzten Bimetallklappe 15 bedeuten. Der Linienzug 17 wird vom Bimetallabschnitt 19 verwirklicht, der sich bis etwa 350°C stark krümmt, während der zweite Bimetallabschnitt 20 in diesem Temperaturintervall nur eine geringe, strichpunktiert angedeutete Krümmung bzw. Ausbiegung erleidet. Am Ende dieses Temperaturintervalls hat die Bimetallklappe 15 infolgedessen die in Fig. 6 strichliert gezeichnete Stellung eingenommen, d. h. den Gastaschenzufluß vollständig gesperrt. Umgekehrt verhalten sich die beiden Bimetallabschnitte im oberen Temperaturbereich zwischen etwa 350 und 700°C, so daß sich die Klappe 15 jetzt mit steigender Temperatur entsprechend der strichpunktierten Endstellung wieder zurückkrümmt und bei Erreichen der oberen Temperaturgrenze den Zufluß in die Gastasche im erwünschten Maße freigegeben hat, um den Ladeluftdruck zu reduzieren.

Die Fig. 7 und 8 zeigen eine für die Einrichtung nach Fig. 6 geeignete Bimetallklappe 21 und das dazugehörige Diagramm der Wärmeausdehnungskoeffizienten ihrer beiden Komponenten 22 und 23. Die Wirkung dieser Bimetallpaarung entspricht jener der kombinierten Paarung der Klappe 15 bei der Einrichtung nach Fig. 6. Der zur Komponente 22 gehörige Koeffizient $\alpha$ (22) steigt in einem unteren Temperaturbereich stark an und bleibt in einem oberen ziemlich konstant. Umgekehrt verhält sich $\alpha$ (23), so daß ein derart zusammengesetztes Bimetall beim Durchlaufen des ganzen Temperaturintervalls wiederum gegenläufige Ausbiegungen und schließlich, wie für die Einrichtung nach Fig. 6 erwünscht, eine S-förmige Gestalt annehmen wird.

Die Fig. 9 zeigt, wie der Umriß einer Bimetallklappe 24 beispielsweise ausgeführt werden könnte. Der Umriß der Gastasche ist in dieser Figur mit 25, das den Hochdruckabgaskanal umgebende Gehäuse mit 26 und der Zellenrotor mit 27 bezeichnet.

Die Fig. 10a—d zeigen beispielsweise Befestigungsmöglichkeiten für die Bimetallklappe im Gehäuse.

Die Fig. 11ad zeigen, wie schon früher erwähnt, Kombinationen verschiedener Bimetallpaarungen. Je nach gewählter Paarung, Länge oder Dicke der Komponenten lassen sich auf diese Weise örtlich unterschiedliche Krümmungen erzielen und damit in Anpassung an einen gewünschten Verlauf der Querschnittssteuerung eines Gastaschenzuflusses der dazu erforderliche temperaturabhängige Verlauf der Randausbiegung der Bimetallklappe verwirklichen.

Als weiteres Mittel für eine temperaturabhängige Steuerung des Gastaschenzuflusses kämen auch Klappen aus Formgedächtnislegierungen in Betracht, insbesondere dann, wenn solche Klappen nicht kontinuierlich gesteuert werden müssen, sondern wenn dafür auch ein stufenweises oder sprunghaftes Öffnen genügt.

Bezeichnungsliste

| | |
|---|---|
| 1 | Gewünschter temperaturabhängiger Verlauf des Öffnungsquerschnittes des Gastaschenzuflusses |
| 2 | Gehäuse der Druckwellenmaschine |
| 3 | Hochdruckabgaskanal |
| 4 | Zellenrotor |
| 5 | Drehrichtungspfeil |
| 6 | Gastasche |
| 7 | Bimetallklappe |
| 8 | Steg |
| 9 | Temperaturabhängige Durchbiegung des freien Randes der Bimetallklappe |
| 10 | Bimetallklappe |
| 11 | Strömungsteiler |
| 12 | Gastaschenkanal |
| 13 | Gewünschter temperaturabhängiger Verlauf des Öffnungsquerschnittes des Gastaschenzuflusses |
| 14 | Temperaturabhängige Durchbiegung des freien Randes der Bimetallklappe |
| 15 | Bimetallklappe |
| 16 | Gewünschter temperaturabhängiger Verlauf des Öffnungsquerschnittes des Gastaschenzuflusses |
| 17 } 18 | Temperaturabhängige Durchbiegungen der Bimetallklappe 15 |
| 19 } 20 | Abschnitte der Bimetallklappe 15 |
| 21 | Bimetallklappe |
| 22 } 23 | Komponenten der Bimetallklappe 21 |
| 24 | Bimetallklappe |

| 25 | Gastasche |
|---|---|
| 26 | Gehäuse |
| 27 | Zellenrotor |
| A | Veränderlicher Querschnitt des Gastaschenzuflusses |
| $A_{max}$ | Maximaler Öffnungsquerschnitt des Gastaschenzuflusses |
| F | Veränderliche Ausbiegung der Bimetallklappe |
| $F_{max}$ | Maximale Ausbiegung der Bimetallklappe |
| t (°C) | Temperatur der Hochdruckabgase |
| $\alpha$ (m/m, °C) | Wärmeausdehnungskoeffizient |
| T (°K) | Absolute Temperatur |

## Patentansprüche

1. Steuerungseinrichtung in einer gasdynamischen Druckwellenmaschine zur Aufladung von Verbrennungsmotoren, wobei der hochdruckabgaskanal der Druckwellenmaschine vor seiner Einmündung in das Gehäuse des Zellenrotors eine Gastasche zur Abzweigung von Hochdruckabgas im Nebenstrom bei bestimmten Betriebszuständen aufweist, gekennzeichnet durch eine im Gehäuse (2) der Druckwellenmaschine längs einer ihrer Ränder starr eingespannte, bei Temperaturänderungen eine Biegungsverformung annehmende Klappe (7; 10; 15; 24) im Hochdruckabgaskanal (3), die eine Trennwand zwischen dem Hochdruckabgaskanal (3) und der Gastasche (6) bildet und deren Größe und Verlauf der temperaturabhängigen Biegeverformung der für die Druckwellenmaschine gewünschten temperaturabhängigen Öffnungscharakteristik des Zuflußquerschnittes der Gastasche (6) entsprechen.

2. Steuerungseinrichtung nach Anspruch 1, dadurch gekennzeichnet, daß die Klappe (7; 10; 15; 24) aus einem Bimetall besteht.

3. Steuerungseinrichtung nach Anspruch 2, dadurch gekennzeichnet, daß die Bimetallklappe (15; Fig. 11a – d) aus einer Kombination verschiedener Bimetallpaarungen zusammengesetzt ist.

4. Steuerungseinrichtung nach Anspruch 3, dadurch gekennzeichnet, daß die Bimetallklappe (15) aus zwei aneinander anschließenden Bimetallpaarungen (19, 20) besteht, deren Biegeverformungen gegensinnig verlaufen, wobei die eine Bimetallpaarung (19) in einem niedrigen Temperaturbereich eine wesentlich größere Biegeverformung erfährt als die andere (20), deren Biegeverformung hingegen in einem höheren Temperaturbereich wesentlich größer ist als die der ersten Bimetallpaarung (19).

5. Steuerungseinrichtung nach Anspruch 2, dadurch gekennzeichnet, daß der Wärmeausdehnungskoeffizient der einen Komponente (22) der Bimetallklappe (21) in einem unteren Temperaturbereich stark zunimmt und in einem oberen Temperaturbereich sehr wenig oder gar nicht zunimmt, wogegen sich die zweite Komponente (23) in den oben genannten Temperaturbereichen bezüglich ihres Wärmeausdehnungskoeffizienten gerade umgekehrt verhält.

6. Steuerungseinrichtung nach Anspruch 2, gekennzeichnet durch einen im Hochdruckabgaskanal angeordneten Strömungsteiler (11) im bereich der voll geöffneten Stellung der Bimetallklappe (10) sowie einen Gastaschenkanal (12) zur Speisung der Gastasche bei durch die Bimetallklappe (10 abgesperrtem Zufluß zur Gastasche.

## Claims

1. Control device in a gas-dynamic pressure-wave machine for the supercharging of internal combustion engines, the high-pressure exit gas channel of the pressure-wave machine having, upstream of its point of entry into the housing of the cellular rotor, a gas pocket for branching off high-pressure exit gas as a by-pass under certain operating conditions, characterised by a flap (7; 10; 15; 24) in the high-pressure exit gas channel (3), which flap is rigidly clamped along one of its edges in the casing (2) of the pressure-wave machine and undergoes a flexural deformation in the case of temperature changes and which forms a partition between the high-pressure exit gas channel (3) and the gas pocket (6), the magnitude and curve of its temperature-dependent flexural deformation corresponding to the temperature-dependent opening characteristics, desired for the pressure-wave machine, of the inflow cross-section of the gas pocket (6).

2. Control device according to Claim 1, characterised in that the flap (7; 10; 15, 24) consists of a bimetal.

3. Control device according to Claim 2, characterised in that the bimetal flap (15; Figures 11a – d) is assembled from a combination of different bimetal pairs.

4. Control device according to Claim 3, characterised in that the bimetal flap (15) consists of two mutually adjoining bimetal pairings (19, 20), the flexural deformations of which are in opposite directions, one bimetal pairing (19) undergoing a substantially greater flexural deformation in a low temperature range than the other pairing (20), the flexural deformation of which, by contrast, is substantially, greater in the high temperature range than that of the first bimetal pairing (19).

5. Control device according to Claim 2, characterised in that the coefficient of thermal expansion of one component (22) of the bimetal flap (21) increases steeply in a lower temperature range and increases very slightly or not at all in an upper temperature range, whereas the second component (23) has the precisely converse behaviour with respect to its coefficient of thermal expansion in the abovementioned temperature ranges.

6. Control device according to Claim 2, characterised by a flow divider (11), arranged in the high-pressure exit gas channel, in the region of the fully open position of the bimetal flap (10) as well as a gas pocket channel (12) for feeding the gas pocket, when the supply to the gas pocket is blocked by the bimetal flap (10).

## Revendications

1. Dispositif de contrôle dans une machine à ondes de pression à dynamique des gaz pour suralimenter des moteurs à combustion interne, le canal de gaz d'échappement à haute pression de la machine à ondes de pression présentant, en amont de son orifice débouchant dans le carter du roter cellulaire, une poche à gaz servant à dériver des gaz d'échappement à haute pression dans un flux secondaire dans des conditions de fonctionnement déterminées, caractérisé par un clapet (7, 10, 15, 24) dans le canal (3) des gaz d'échappement à haute pression fixé rigidement dans le carter (2) de la machine à ondes de pression le long d'un de ses bords et se déformant en flexion sous l'effet de variations de température, qui forme une cloison de séparation entre le canal de gaz d'échappement à haute pression (3) et la poche à gaz (6) et dont la dimension et l'allure de sa déformation en flexion en fonction de la température correspondent à la caratéristique d'ouverture en fonction de la température de la section d'admission de la poche à gaz (6) souhaitée pour la machine à ondes de pression.

2. Dispositif de contrôle suivant la revendication 1, caractérisé en ce que le clapet (7, 10, 15, 24) est fait d'un bimétal.

3. Dispositif de contrôle suivant la revendication 2, caractérisé en ce que le clapet bimétallique (15, Fig. 11a à d) est formé d'une combinaison de divers couples bimétalliques.

4. Dispositif de contrôle suivant la revendication 3, caractérisé en ce que le clapet bimétallique (15) est formé de deux couples bimétalliques (19, 20) adjacents l'un à l'autre dont les déformations en flexion sont opposées l'une à l'autre, le premier couple bimétallique (19) subissant, dans un domaine de températures peu élevées, une déformation en flexion nettement supérieure à celle de l'autre (20) dont la déformation en flexion est par contre nettement plus importante que celle du premier couple bimétallique (19) dans un domaine de températures plus élevées.

5. Dispositif de contrôle suivant la revendication 2, caractérisé en ce que le coefficient de dilatation thermique du premier composant (22) du clapet bimétallique (21) augmente fortement dans un domaine de températures inférieures et n'augmente que faiblement ou même pas du tout dans un domaine de températures supérieures, tandis que le second composant (23) se comporte exactement de manière inverse dans les domaines de températures précités en ce qui concerne ses coefficients de dilatation thermique.

6. Dispositif de contrôle suivant la revendication 2, caractérisé par un distributeur d'écoulement (11) situé dans le canal de gaz d'échappement á haute pression dans la zone de la position d'ouverture complète du clapet bimétallique (10), ainsi que par un canal de poche à gaz (12) destiné à alimenter la poche à gaz dans le cas d'une admission à la poche à gaz bloquée par le clapet bimétallique (10).

# FIG. 1

# FIG. 2

# FIG. 3

# FIG. 4

# FIG.5

# FIG.6

FIG. 9

a          b          c          d

FIG. 10

FIG.7

FIG.8

α (m/m, °C)

α(22)

α(23)

T (°K)

21

22 23

FIG.11

a    b    c    d